# EUROPÄISCHE PATENTSCHRIFT

(11) **EP 3 885 790 B1**
(45) Veröffentlichungstag und Bekanntmachung des Hinweises auf die Patenterteilung: **18.02.2026**
(21) Anmeldenummer: 20166175.8
(22) Anmeldetag: 27.03.2020
(51) Int. Cl.: G01S 7/481, G01S 17/04, G01V 8/14, G02B 27/09, G02B 3/06

(54) **OPTISCHER SENSOR**
OPTICAL SENSOR
CAPTEUR OPTIQUE

(43) Veröffentlichungstag der Anmeldung: 29.09.2021
(73) Patentinhaber: Leuze electronic GmbH + Co. KG, 73277 Owen/Teck (DE)
(72) Erfinder: Wendel, Simon, 73230 Kirchheim unter Teck (DE); Moll, Georg, 72655 Altdorf (DE)
(74) Vertreter: Ruckh, Rainer Gerhard

(56) Entgegenhaltungen:
- EP-A1- 1 512 992
- EP-A1- 2 362 237
- EP-A2- 0 170 008
- CH-A- 378 420
- CN-A- 108 415 148
- DE-A1- 102015 115 101

## Beschreibung

Die Erfindung betrifft eine Sensoranordnung mit einem optischen Sensor zum Erkennen zumindest eines Objektes in einem Überwachungsbereich, mit einem Sendelichtstrahlen emittierenden Sender und einem Empfangslichtstrahlen empfangenden Empfänger und einer Auswerteeinrichtung zur Generierung eines Objektfeststellungssignals in Abhängigkeit von Empfangssignalen an einem Ausgang des Empfängers, und mit einer Sendeoptik und einer Empfangsoptik, wobei die Sendeoptik zur Kollimation der Sendelichtstrahlen und die Empfangsoptik zur Fokussierung der Empfangslichtstrahlen auf dem Empfänger dient, gemäß dem Oberbegriff von Anspruch 1.

Optische Sensoren zur Erfassung von Objekten, die als Reflexionslichtschranken oder Distanzsensoren ausgebildet sein können, weisen eine Lichtquelle zum Aussenden von sichtbarem oder unsichtbarem Licht und einen Detektor zum Empfangen von Licht, welches von der Sendelichtstrahlen emittierenden Lichtquelle stammt, auf. Als Lichtquelle oder Sender können beispielsweise Leuchtdioden, Laserdioden oder IR-Dioden eingesetzt sein. Der Sender bzw. die Lichtquelle können gepulst oder getaktet betrieben werden. Es kann auch zweckmäßig sein, das Licht zu polarisieren oder mittels Blenden, Linsen bzw. Kollimatoren zu einem Lichtstrahl zu bündeln.

Bei den optischen Sensoren, auf welche sich die Erfindung bezieht ist generell als kooperatives Ziel ein den Überwachungsbereich begrenzender Retroreflektor vorgesehen.

Die gesamten über den Retroreflektor geführten Sendelichtstrahlen werden in einem engen Streukegel zurück auf den optischen Sensor reflektiert, sodass das Sendelicht im Wesentlichen in derselben Richtung am Retroreflektor zurückreflektiert wird, in welcher dieses dort auftraf.

Vorteilhaft hierbei ist, dass dadurch eine Objekterfassung, insbesondere eine Distanzmessung auch über große Entfernungen möglich wird. Nachteilig hierbei ist jedoch, dass Probleme bei Objektdetektionen oder Distanzmessungen im Nahbereich auftreten, da aufgrund des Reflexionsverhaltens des Retroreflektors zu wenig Sendelicht auf den Empfänger des optischen Sensors trifft.

Um diesem Problem zu begegnen können separate Nahbereichsoptiken vorgesehen sein, was jedoch zu einem erhöhten konstruktiven Aufwand und auch einem erhöhten Platzbedarf führt.

Die EP 3 546 980 A1 betrifft einen optischen Sensor zum Erkennen von Objekten in einem Überwachungsbereich des Sensors, mit einem Lichtsender mit Sendeoptik zum Aussenden von Sendelichtstrahlen, mit einem Empfänger mit Empfangsoptik zum Empfangen von Lichtstrahlen und mit einer Auswerteeinheit zur Generierung eines Objektfeststellungssignals in Abhängigkeit von Empfangssignalen an einem Ausgang des Empfängers, wobei die Sendeoptik und die Empfangsoptik unterschiedliche optische Achsen aufweisen. Um von einem Objekt remittiertes Licht, welches auf einen Übergangsbereich zwischen Sendeoptik und Empfangsoptik gerichtet ist, für die Generierung von Empfangssignalen nutzen zu können und insbesondere Licht aus dem Nahbereich zu der Empfangsoptik nutzen zu können ist vorgesehen, dass der optische Sensor eine Einrichtung zur Kollimation von Lichtstrahlen auf die Empfangsoptik aufweist, die im Übergangsbereich zwischen der Sendeoptik und der Empfangsoptik angeordnet ist und Licht aus dem Übergangsbereich auf die Empfangsoptik leitet.

Die EP 0 170 008 A2 betrifft einen Lichttaster oder eine Lichtschranke mit einem Lichtsender und einem Lichtempfänger, welche beide im gleichen Gehäuse untergebracht sind und mit einer Plankonvexlinse zur Bündelung des Lichts des Lichtsenders zu einem Lichtbündel sowie zur Fokussierung des zurückgeworfenen Lichts und Mitteln zur Lenkung des zurückgeworfenen Lichts zum Lichtempfänger. Die Planfläche der Plankonvexlinse ist mit einer Neigung zu einer zur Achse des Lichtbündels senkrechten Ebene angeordnet.

Die CH 378 420 A1 betrifft eine lichtelektrische Einrichtung mit einer Lichtquelle, einem lichtempfindlichen Element und einem Reflektor. Die Einrichtung umfasst Mittel zum Ausblenden eines die optische Achse umgebenden Teil des Querschnitts des von der Lichtquelle ausgehenden Strahlenbündels. Weiterhin vorgesehen ist eine das Strahlenbündel beeinflussende Sammeloptik zwischen Lichtquellen und dem Reflektor, wobei die einer ausgeblendeten Zone entsprechende, den reflektierten Lichtanteil beeinflussende Zone der genannten Optik eine andere Brennweite aufweist als die diese Zone umgebende Zone.

Die EP 1 512 992 A1 betrifft einen optischen Sensor zur Erfassung von Objekten in einem Überwachungsbereich mit einem Sendelichtstrahlen emittierenden Sender, einem Empfangslichtstrahlen empfangenden Empfänger und einer Auswerteeinheit zur Auswertung der Empfangssignale am Ausgang des Empfängers. Dem Sender ist eine Sendeoptik in Form einer Plankonvexlinse zugeordnet. Der Empfänger besteht aus einer Mehrfachanordnung von Empfangselementen. In einem Einlernvorgang wird mit den Sendelichtstrahlen des Senders ein den Überwachungsbereich begrenzendes Hintergrundobjekt ausgeleuchtet, wobei die Pegel der Empfangssignale der Empfangselemente, welche durch die vom Hintergrundobjekt auf den Empfänger zurückreflektierten Empfangslichtstrahlen generiert werden, als Referenzsignalverlauf in der Auswerteeinheit eingelernt werden. Nach erfolgtem Einlernvorgang wird in der Auswerteeinheit eine Objektmeldung generiert, falls der Signalverlauf der Pegel der Empfangssignale der Empfangselemente vom Referenzsignalverlauf abweicht.

Die EP 2 362 237 A1 betrifft einen Laser-Radar-Sensor mit einem Lichtstrahlen emittierenden Sender und einem Lichtstrahlen empfangenden Empfänger. Zur Erzeugung eines Lichtstrahls mit divergierendem Strahlprofil ist dem Sender eine Sendeoptik in Form einer rotierenden Zylinderlinse zugeordnet.

Die DE 10 2015 115 101 A1 betrifft ein Sensorsystem mit einer 3D-Kamera, die Entfernungswerte nach einem Laufzeitverfahren bestimmt, und mit einer Lichtquelle. Der Lichtquelle ist eine Sendeoptik zur Zerstreuung des ausgesandten Lichts zugeordnet.

Die CN 108 415 148 A betrifft eine Einrichtung mit einem Lichtstrahlen emittierenden Sender und einem Lichtstrahlen empfangenden Empfänger. Im Strahlengang der Lichtstrahlen sind Optikelemente in Form von Umlenkspiegeln und Linsen vorgesehen.

Ausgehend von diesem Stand der Technik liegt der Erfindung die Aufgabe zugrunde, eine Sensoranordnung mit einem optischen Sensor anzugeben, dessen Messbereichsuntergrenze unter zumindest der Beibehaltung seiner Fernbereichseigenschaften und seiner Emissionsleistung minimiert ist.

Die Aufgabe wird mit einem optischen Sensor mit den Merkmalen von Anspruch 1 gelöst.

Die Erfindung betrifft eine Sensoranordnung mit einem optischen Sensor zum Erkennen zumindest eines Objektes in einem Überwachungsbereich und mit einem den Überwachungsbereich begrenzenden Retroreflektor. Der optische Sensor umfasst einen Sendelichtstrahlen emittierenden Sender, einen Empfangslichtstrahlen empfangenden Empfänger und eine Auswerteeinrichtung zur Generierung eines Objektfeststellungssignals in Abhängigkeit von Empfangssignalen an einem Ausgang des Empfängers sowie eine Sendeoptik und eine Empfangsoptik. Die Sendeoptik dient zur Kollimation der Sendelichtstrahlen und die Empfangsoptik zur Fokussierung der Empfangslichtstrahlen auf dem Empfänger. Die Sendeoptik weist eine Kollimatorlinse zur Erhöhung der Leistungsdichte der Sendelichtstrahlen an zumindest einem Randbereich eines durch die Sendeoptik auf dem Retroreflektor erzeugten Lichtfleckes auf. Die Kollimatorlinse weist eine dem Sender zugewandte erste refraktive Fläche auf. Durch eine definierte konkave, spitz in ein Zentrum auslaufende, rotationssymmetrische Form ist in Bezug auf eine Achse der Sendelichtstrahlen gekennzeichnet, wobei durch die erste refraktive Fläche die Sendelichtstrahlen von der Achse weg aufgespreizt werden, wobei die Sendelichtstrahlen durch die Kollimatorlinse geführt und an eine als in Bezug auf die eintretenden Sendelichtstrahlen konvexe Ringfläche bildende zweite refraktive Fläche geführt sind. Mit der zweiten refraktiven Fläche werden die Sendelichtstrahlen gebündelt und als Ringstrahl mit erhöhter Leistungsdichte verlassen.

Für den Fall, dass der optische Sensor ein Distanzsensor ist, bildet der Retroreflektor selbst das zu erfassende Objekt, dessen Entfernung bestimmt werden soll.

Bevorzugte Ausführungen ergeben sich aus den abhängigen Ansprüchen.

Dadurch, dass die Sendeoptik eine Einrichtung zur Erhöhung der Leistungsdichte der Sendelichtstrahlen an zumindest einem Randbereich des durch die Sendeoptik auf ein Objekt oder Reflektor erzeugten Lichtfleckes aufweist, ist eine technische Maßnahme angegeben im Nahbereich mehr Licht für die Empfangsoptik bereitzustellen, weil ein höherer Anteil des Sendelichts den Weg geht, den die Empfangsoptik erfassen kann. Im Gegenzug wird der Anteil des Sendelichts in der Mitte des Lichtflecks, der nach der Reflektion vollständig in den Sender zurückfällt und im Nahbereich verloren geht, reduziert.

Die Gestaltung der geometrischen Form des Randbereichs des Sendelichtflecks auf dem Retroreflektor kann grundsätzlich beliebig sein und an die Empfangsoptik angepasst sein. Sie ist vorgebbar.

Der Randbereich mit erhöhter Leistungsdichte der Sendelichtstrahlen kann aus zwei sich zu einer Achse der Sendelichtstrahlen diametral gegenüberliegenden Randflächenbereichen gebildet sein. Die Randflächenbereiche können sich gegenseitig berühren oder getrennt voneinander sein.

Der Randbereich kann auch eine teilweise oder vollkommene Ringform aufweisen.

Vorteilhaft ist die gesamte Sendelichtleistung auf den Randbereich gerichtet, wobei die energetische Verteilung vorgebbar ist.

Erfindungsgemäß weist die Sendeoptik eine Kollimatorlinse auf, die zu der Lichtquelle hin einer erste refraktive Fläche aufweist, welche die von der Lichtquelle kommenden Sendelichtstrahlen von der Achse weg aufspreizt. Eine zweite refraktive Fläche der Kollimatorlinse kollimiert die Lichtstrahlen zu einer Ringform, in der sie dann zu dem Retroreflektor oder dem Objekt emittiert werden. Dadurch wird sowohl die Sendelichtleistung je Flächeneinheit der Ringform erhöht, als auch die Ringform kompakt in Bezug auf den Durchmesser und deren Breite geformt.

Die Kollimatorlinse ist bevorzugt aus Kunststoff in einem Spritzgussverfahren gefertigt. Dies bietet Kostenvorteile und kann das Anordnen von Halterungselementen für die Kollimatorlinse erleichtern.

Eine Ausführung der Kollimatorlinse in Glas bietet Vorteile hinsichtlich mechanischer Eigenschaften wie der Ausdehnung sowie hinsichtlich optischer Eigenschaften wie der Temperaturabhängigkeit des Brechungsindex.

In jedem Fall ist die relative Empfangsleistung durch die erfindungsgemäße Einrichtung zur Erhöhung der Leistungsdichte der Sendelichtstrahlen bei einer

Objektdistanz von etwa 0,7 m und weniger deutlich erhöht gegenüber optischen Sensoren gemäß dem Stand der Technik.

Die Sende- und Empfangsoptik bilden bevorzugt eine Einheit, die die beschriebene Kollimatorlinse umfasst.

Es kann auch vorteilhaft sein, die beschriebene Strahlform der Sendelichtstrahlen mit einer Erhöhung der optischen Leistung in einem Randbereich durch eine aus mehreren Einzelteilen bestehende Cassegrain-Optik zu erzielen. Die gewünschte Strahlformung kann außerdem auch durch ein diffraktives optisches Element erreicht werden.

Die Erfindung wird im Nachstehenden anhand der Zeichnungen erläutert. Es zeigen:
- Figur 1:: Eine schematische Darstellung der optischen Komponenten eines als Distanzsensors ausgebildeten optischen Sensors gemäß des Standes der Technik,
- Figur 2:: eine schematische, perspektivische Ansicht einer längsgeschnittenen Sendeoptik eines optischen Sensors gemäß der Erfindung,
- Figur 3:: einen Längsschnitt durch eine erfindungsgemäße Einrichtung zur Erhöhung der Leistungsdichte der Sendelichtstrahlen, die als Kollimatorlinse mit einem schematischen Strahlengang der Sendelichtstrahlen dargestellt ist,
- Figur 4:: eine perspektivische Ansicht einer Kollimatorlinse, wie in Figur 2 und 3 gezeigt,
- Figur 5a:: eine Ansicht eines von einem optischen Sensor gemäß des Standes der Technik erzeugten Lichtflecks; und
- Figur 5b:: eine Ansicht eines von einem erfindungsgemäßen optischen Sensor erzeugten Lichtflecks.

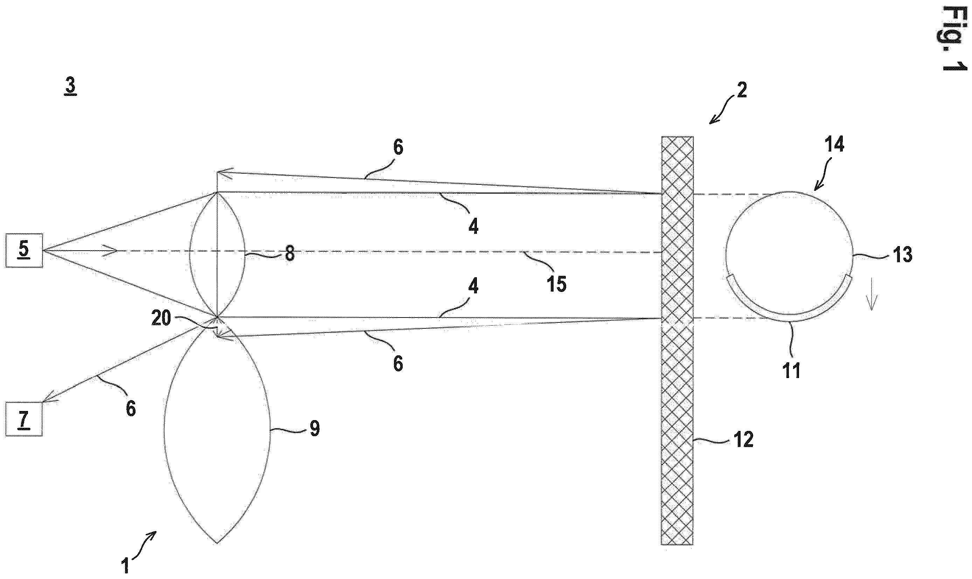

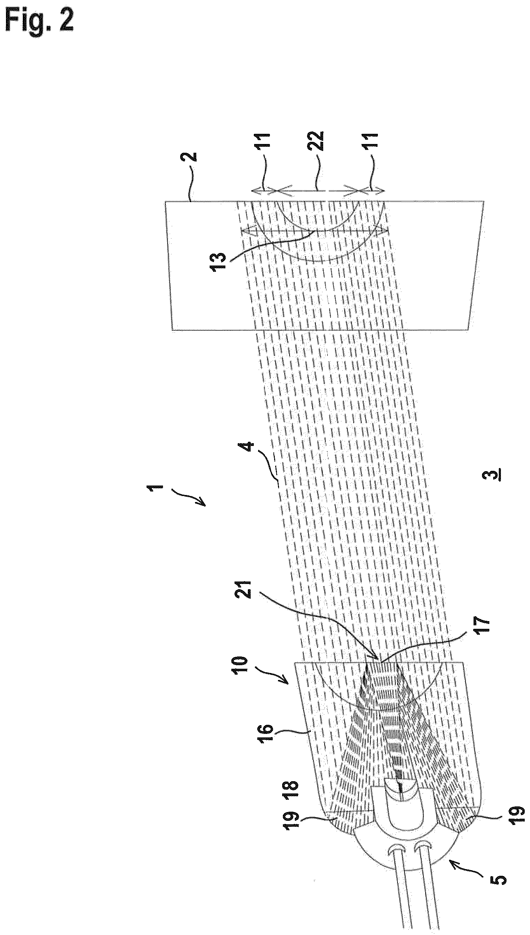

In Figur 1 ist in einer schematischen Darstellung ein optischer Sensor 1 zur Erfassung der Distanz zu einem als Retroreflektor 12 dargestellten Objekt 2 in einem Überwachungsbereich 3 gezeigt. Im gezeigten Fall befindet sich der Retroreflektor 12 in einem Nahbereich, das heißt in geringer Entfernung zum optischen Sensor 1. Der optische Sensor 1 erzeugt mit einer nicht dargestellten, nachgelagerten Auswerteeinrichtung ein Objektfeststellungssignal und gibt dieses als Ausgangsgröße aus. Der optische Sensor 1 weist einen Sendelichtstrahlen 4 emittierenden Sender 5 und einen Empfangslichtstrahlen 6 empfangenden Empfänger 7 auf, die an die gemeinsame Auswerteeinrichtung angeschlossen und in einem ebenfalls nicht dargestellten Gehäuse integriert sind. Der Sender 5 besteht aus einer in Figur 2 in einem schematischen Längsschnitt dargestellten Laserdiode. Der Empfänger 7 kann von einer Avalanche-Photodiode gebildet sein. Die Auswerteeinrichtung besteht aus einem Mikroprozessor und weiteren, nicht dargestellten Peripheriebausteinen.

Die Entfernungsmessung erfolgt beispielshaft nach einem Phasenmessprinzip, wobei den Sendelichtstrahlen 4 eine Modulationsfrequenz aufgeprägt ist. Die Phasenverschiebung der von dem Retroreflektor 12 zurückreflektierten Empfangslichtstrahlen 6 zu dem vom Sender 5 emittierten Sendelichtstrahlen 4 wird in der Auswerteeinrichtung als Maß für die Objektdistanz ausgewertet.

Der Sender 5 und der Empfänger 7 sind nicht koaxial angeordnet. Dem Sender 5 ist eine Sendeoptik 8 nachgelagert und dem Empfänger 7 ist eine Empfangsoptik 9 vorgelagert. Die Sendelichtstrahlen 4 werden durch die Sendeoptik 8 geführt und kollimiert. Bei diesen optischen Sensoren gemäß dem Stand der Technik ist der von der Lichtquelle 5 erzeugte Lichtfleck 13 im Wesentlichen rund und homogen, wie Figur 1 rechts in einer Ansicht des Lichtflecks 13 zeigt.

Befindet sich, wie in Figur 1 dargestellt, der Retroreflektor 12 im Nahbereich, wird nur der Anteil 20 der Empfangsoptik 9 zum Empfang der Empfangslichtstrahlen 6 genutzt, da nur auf diesen Anteil 20 der Empfangsoptik Empfangslicht, nämlich den Randbereich 11 des Lichtflecks 13 geführt wird.

Befindet sich dagegen der Retroreflektor 12 im Fernbereich, das heißt in großen Distanzen zum optischen Sensor 1, wird vom Lichtfleck 13 die gesamte Empfangsoptik ausgeleuchtet.

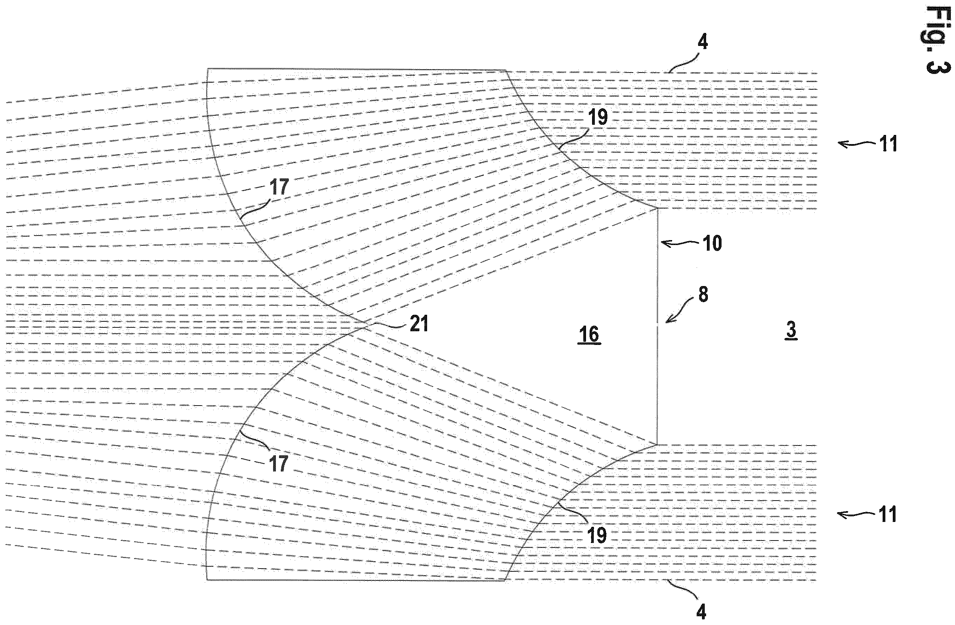

Diesen Nachteil überkommt der optische Sensor 1 gemäß der Erfindung, wie zum Beispiel in Figur 2 dargestellt. Dort ist der Sendeoptik 8 eine Einrichtung 10 zur Erhöhung der Leistungsdichte der Sendelichtstrahlen 4 an zumindest einem Randbereich 11 (vgl. Figur 2 und Figur 3) des Lichtflecks 13 zugeordnet. Dadurch wird wesentlich mehr optische Lichtleistung des Senders 5 in von der Empfangsoptik 9 erfassbare Anteile des Lichtflecks 13 transformiert und dadurch die Messbereichsgrenze des optischen Sensors 1 wesentlich weiter herabgesetzt, als im Stand der Technik realisiert.

Im Gegenzug wird der Anteil des Sendelichts in der Mitte des Lichtfleckes 13, das heißt der Zentralbereich 22 (Figur 2), der nach Reflexion vollständig in den Sender 5 zurückfällt, reduziert. Die Reichweite des optischen Sensors 1 wird dadurch nicht verändert, da bei der erfindungsgemäßen Sendeoptik 8 bei gleicher Gesamtsendeleistung nur die räumliche Verteilung des Sendelichts geändert wird. Die Ausbildung dieser räumlichen Verteilung spielt für große Reflektordistanzen keine Rolle mehr, sodass die Reichweite des optischen Sensors 1 unverändert bleibt.

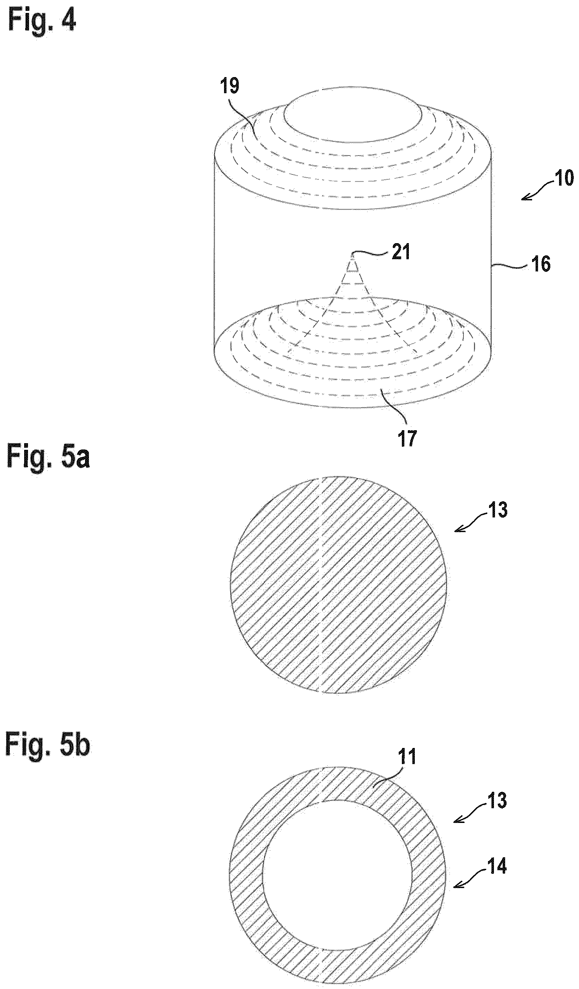

Die Figuren 5a und 5b verdeutlichen dies, wobei in Figur 5a ein Lichtfleck 13 eines optischen Sensors 1 gemäß dem Stand der Technik gezeigt ist, während in Figur 5b ein Lichtfleck 13 des optischen Sensors 1 gemäß der Erfindung dargestellt ist, der Ringform annimmt.

Prinzipiell sind auch andere geometrischen Gestaltsformen 14 als die Ringform bei dem Lichtfleck 13 denkbar. Die Einrichtung 10 zur Erhöhung der Leistungsdichte der Sendelichtstahlen 4 ist Teil oder integrierter Bestandteil der Sendeoptik 8 und wird vorteilhaft durch die Gestalt von refraktiven oder brechenden Linsenflächen 17 und 19 einer Kollimatorlinse 16 dargestellt.

Die in den Figuren 2 und 3 dargestellte Kollimatorlinse 16 wird vorteilhaft aus Kunststoff hergestellt, kann aber auch aus einem Glaswerkstoff gebildet sein. Sie ist in einer exemplarischen Ansicht in Figur 4 zudem gezeigt, wobei auch ihre refraktiv auf die Sendelichtstrahlen 4 wirkenden Flächen 17 und 19 zu erkennen sind.

Wie erwähnt, weist die, die Sendeoptik 8 darstellende Kollimatorlinse 16 die zu der Lichtquelle 18 hin gewandte, erste refraktive Fläche 17 auf, die, wie die Figuren 3 und 4 zeigen, durch eine definierte konkave, spitz in ein Zentrum 21 auslaufende, rotationssymmetrische Form in Bezug auf eine Achse 15 der Sendelichtstrahlen 4 gekennzeichnet ist.

Durch die erste refraktive Fläche 17 werden die Sendelichtstrahlen 4 von der Achse 15 weg aufgespreizt, durch die Linse 16 geführt und an die zweite, als in Bezug auf die eintretenden Sendelichtstrahlen 4 konvexe Ringfläche gebildete, refraktive Fläche 19 geführt. In der zweiten refraktiven Fläche 19 werden die Sendelichtstrahlen 4 gebündelt und verlassen die zweite refraktive Fläche 19 als Ringstrahl mit erhöhter optischer Leistungsdichte hin zu dem Objekt 2 oder Retroreflektor 12.

Die Berechnung der Gestalt der beiden refraktiven Flächen 17, 19 basiert auf einem analytischen Verfahren, wobei durch das Lösen von Differentialgleichungen Strahlzuordnungen und damit Kurvenformen der refraktiven Flächen 17, 19 berechnet werden können.

Die Sendelichtleistung bei dem gezeigten, erfinderischen optischen Sensor 1 ist auch unter Einhaltung der Augensicherheit gegenüber Sensoren gemäß des aktuellen Standes der Technik um bis zu 30 % erhöht.

### Bezugszeichenliste

- (1): Optischer Sensor
- (2): Objekt
- (3): Überwachungsbereich
- (4): Sendelichtstrahl
- (5): Sender
- (6): Empfangslichtstrahl
- (7): Empfänger
- (8): Sendeoptik
- (9): Empfangsoptik
- (10): Einrichtung zur Erhöhung der Leistungsdichte der Sendelichtstrahlen
- (11): Randbereich
- (12): Retroreflektor
- (13): Lichtfleck
- (14): Gestalt, geometrisch
- (15): Achse
- (16): Kollimatorlinse
- (17): Fläche, refraktiv, erste
- (18): Lichtquelle
- (19): Fläche, refraktiv, zweite
- (20): Anteil, v. 13
- (21): Zentrum
- (22): Zentralbereich

## Patentansprüche

1. Sensoranordnung mit einem optischen Sensor (1) zum Erkennen zumindest eines Objektes (2) in einem Überwachungsbereich (3), und mit einen den Überwachungsbereich (3) begrenzenden Retroreflektor (12), wobei der optische Sensor (1) einen Sendelichtstrahlen (4) emittierenden Sender (5), einen Empfangslichtstrahlen (6) empfangenden Empfänger (7) und eine Auswerteeinrichtung zur Generierung eines Objektfeststellungssignals in Abhängigkeit von Empfangssignalen an einem Ausgang des Empfängers (7) sowie eine Sendeoptik (8) und eine Empfangsoptik (9) aufweist, wobei die Sendeoptik (8) zur Kollimation der Sendelichtstrahlen (4) und die Empfangsoptik (9) zur Fokussierung der Empfangslichtstrahlen (6) auf dem Empfänger (7) dient, **dadurch gekennzeichnet, dass** die Sendeoptik (8) eine Kollimatorlinse (16) zur Erhöhung der Leistungsdichte der Sendelichtstrahlen (4) an zumindest einem Randbereich (11) eines durch die Sendeoptik (8) auf dem Retroreflektor (12) erzeugten Lichtfleckes (13) aufweist, wobei die Kollimatorlinse (16) eine dem Sender (5) zugewandte erste refraktive Fläche (17) aufweist und durch eine definierte konkave, spitz in ein Zentrum (21) auslaufende, rotationssymmetrische Form in Bezug auf eine Achse (15) der Sendelichtstrahlen (4) gekennzeichnet ist, wobei durch die erste refraktive Fläche (17) die Sendelichtstrahlen (4) von der Achse (15) weg aufgespreizt werden, wobei die Sendelichtstrahlen (4) durch die Kollimatorlinse (16) geführt und an eine als in Bezug auf die eintretenden Sendelichtstrahlen (4) konvexe Ringfläche bildende zweite refraktive Fläche (19) geführt sind, wobei mit der zweiten refraktiven Fläche (19) die Sendelichtstrahlen (4) gebündelt werden und die zweite refraktive Fläche (19) als Ringstrahl mit erhöhter Leistungsdichte verlassen.

2. Sensoranordnung nach Anspruch 1, **dadurch gekennzeichnet, dass** die Kollimatorlinse (16) aus Glas oder einem Kunststoff gebildet ist.

3. Sensoranordnung nach einem der Ansprüche 1 oder 2, **dadurch gekennzeichnet, dass** der optische Sensor (1) einen koaxial zum Sender (5) angeordneten Empfänger (7) aufweist, wobei dem Sender (5) und Empfänger (7) eine Sende- und Empfangsoptik (8, 9) bildende Kollimatorlinse (16) zugeordnet sind.

4. Sensoranordnung nach Anspruch 1, **dadurch gekennzeichnet, dass** dieser als Distanzsensor ausgebildet ist.

## Claims

1. Sensor arrangement with an optical sensor (1) for detecting at least one object (2) in a monitoring area (3), and with a retroreflector (12) delimiting the monitoring area (3), wherein the optical sensor (1) has a transmitter (5) emitting light beams (4), a receiver (7) receiving light beams (6) and an evaluation device for generating an object detection signal as a function of reception signals at an output of the receiver (7), as well as a transmitting optic (8) and a receiving optic (9), wherein the transmitting optic (8) serving to collimate the transmitted light beams (4) and the receiving optics (9) serving to focus the received light beams (6) on the receiver (7), **characterised in that** the transmitting optics (8) have a collimator lens (16) for increasing the power density of the transmitted light beams (4) at at least one edge region (11) of a light spot (13) produced by the transmitting optics (8) on the retroreflector (12), wherein the collimator lens (16) has a first refractive surface (17) facing the transmitter (5) and is **characterised by** a defined concave, rotationally symmetrical shape tapering to a centre (21), **characterised by** a rotationally symmetrical shape with respect to an axis (15) of the transmitted light beams (4), wherein the transmitted light beams (4) are spread away from the axis (15) by the first refractive surface (17), wherein the transmitted light beams (4) are guided through the collimator lens (16) and guided to a second refractive surface (19) forming a ring surface that is convex with respect to the incoming transmission light beams (4), wherein the transmission light beams (4) are focused by the second refractive surface (19) and leave the second refractive surface (19) as a ring beam with increased power density.

2. Sensor arrangement according to claim 1, **characterised in that** the collimator lens (16) is made of glass or plastic.

3. Sensor arrangement according to one of claims 1 or 2, **characterised in that** the optical sensor (1) has a receiver (7) arranged coaxially with the transmitter (5), wherein the transmitter (5) and receiver (7) are assigned a collimator lens (16) forming transmitting and receiving optics (8, 9).

4. Sensor arrangement according to claim 1, **characterised in that** it is designed as a distance sensor.

## Revendications

1. Dispositif de détection comprenant un capteur optique (1) pour détecter au moins un objet (2) dans une zone de surveillance (3), et avec un rétroréflecteur (12) délimitant la zone de surveillance (3), dans lequel le capteur optique (1) comporte un émetteur (5) émettant des faisceaux lumineux (4), un récepteur (7) recevant des faisceaux lumineux (6) et un dispositif d'évaluation pour générer un signal de détection d'objet en fonction des signaux de réception à une sortie du récepteur (7), ainsi qu'une optique d'émission (8) et une optique de réception (9), l'optique d'émission (8) servant à collimater les faisceaux lumineux émis (4) et l'optique de réception (9) servant à focaliser les faisceaux lumineux reçus (6) sur le récepteur (7), **caractérisé en ce que** l'optique d'émission (8) comporte une lentille de collimation (16) pour augmenter la densité de puissance des faisceaux lumineux émis (4) au niveau d'au moins une zone de bord (11) d'un spot lumineux (13) produit par l'optique d'émission (8) sur le rétroréflecteur (12), la lentille collimatrice (16) présentant une première surface réfractive (17) tournée vers l'émetteur (5) et **se caractérisant par** une forme concave définie, symétrique en rotation, se rétrécissant vers un centre (21), **caractérisée par** une forme symétrique en rotation par rapport à un axe (15) des faisceaux lumineux transmis (4), dans laquelle les faisceaux lumineux transmis (4) sont écartés de l'axe (15) par la première surface réfractive (17), dans laquelle les faisceaux lumineux transmis (4) sont guidés à travers la lentille collimatrice (16) et guidés vers une deuxième surface réfractive (19) formant une surface annulaire qui est convexe par rapport aux faisceaux lumineux transmis entrants (4), dans laquelle les faisceaux lumineux transmis (4) sont focalisés par la deuxième surface réfractive (19) et quittent la deuxième surface réfractive (19) sous la forme d'un faisceau annulaire avec une densité de puissance accrue.

2. Dispositif capteur selon la revendication 1, **caractérisé en ce que** la lentille collimatrice (16) est en verre ou en plastique.

3. Dispositif capteur selon l'une des revendications 1 ou 2, **caractérisé en ce que** le capteur optique (1) comporte un récepteur (7) disposé coaxialement à l'émetteur (5), l'émetteur (5) et le récepteur (7) étant associés à une lentille collimatrice (16) formant des optiques d'émission et de réception (8, 9).

4. Dispositif capteur selon la revendication 1, **caractérisé en ce qu'**il est conçu comme un capteur de distance.
